# EUROPEAN PATENT APPLICATION

(11) **EP 1 503 375 A2**
(43) Date of publication of application: **02.02.2005**
(21) Application number: 04013634.3
(22) Date of filing: 09.06.2004
(51) Int. Cl.: G11B 15/66

(54) **Tape winding method**

(30) Priority: 31.07.2003 JP 2003284436
(71) Applicant: Fuji Photo Film Co., Ltd., Kanagawa (JP)
(72) Inventor: Uchiumi, Kyohisa, c/o Fuji Photo Film Co., Ltd., Kanagawa (JP)
(74) Representative: Klunker . Schmitt-Nilson . Hirsch

(57) **Abstract**

A tape winding method of the present invention comprises a winding process for winding tape (MT) on a periphery of a hub (2) by rotating the hub so that one end surface of a wound roll (5), which consists of the tape having a base film and being wound, becomes concave; and a heating treatment process for performing a heating treatment for the wound roll within a predetermined temperature range just under a glass transition temperature of the base film.

## Description

### BACKGROUND OF THE INVENTION

### 1. FIELD OF THE INVENTION

The present invention relates to a tape winding method.

### 2. DESCRIPTION OF THE RELATED ART

In magnetic recording tape (hereinafter abbreviated to "magnetic tape") layer thinning and surface smoothing progress, based upon a high recording density. However, in winding such the magnetic tape on a tape reel by a tape winder, a tape drive, and the like a winding disturbance is easy to occur, and particularly, in high speed winding a remarkable winding disturbance often occurs.

Such the winding disturbance of the magnetic tape wound on the tape reel is easy to give damage during transportation, thereby a bad winding way is given during storage, and a running accuracy within the tape drive results in being aggravated and causes an abnormal tracking, so it is a problem..

Therefore, it is an important program in assuring requirement performances of a commercial product to ensure a quality of a wound appearance in shipping and to manufacture the magnetic tape that is difficult to generate the winding disturbance in running within the tape drive.

Consequently, in order to solve such the problem, is known a technology of winding the magnetic tape with attracting it to one flange side by magnetic force of a magnet (see line 6 of a lower right column at page 4 to line 6 of an upper right column at page 5 in Japanese Patent Laid-Open Publication Hei 1-313238).

In addition, is known a technology of annealing a band-like polymer film wound with gradually decreasing a knurling thickness from a winding core side to an outer peripheral side, wherein a concavity/convexity is processed to be given on both edges of web lateral directions (see paraphrases 6 to 8 in Japanese Patent Laid-Open Publication Hei 8-244035).

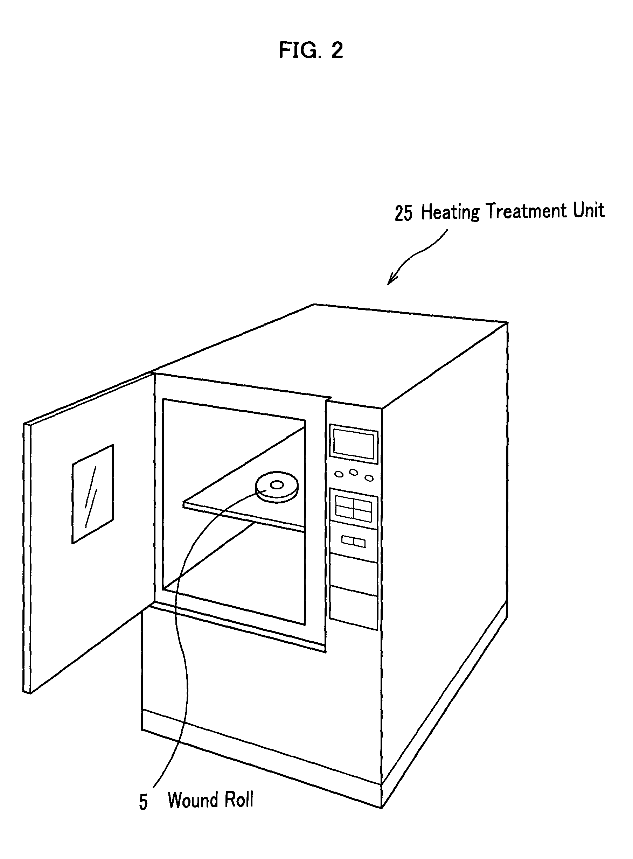

Furthermore, is known a technology of forming a taper on a hub of tape reel and thereby giving a winding way that is difficult to generate the winding disturbance (see paraphrase 21 and FIG. 2 in Japanese Patent Laid-Open Publication Hei 9-138945).

However, because in accordance with the technology described in Japanese Patent Laid-Open Publication Hei 1-313238, in these years layer thinning of a magnetic layer of the magnetic tape rapidly progresses, the magnetic tape becomes difficult to be attracted by magnetic force and it is a situation where a sufficient effect cannot be desired.

In addition, because in accordance with the technology described in Japanese Patent Laid-Open Publication Hei 8-244035 the knurling thickness must be gradually decreased from the winding core side to the outer peripheral side, there is a problem that it takes time.

Furthermore, because in accordance with the technology described in Japanese Patent Laid-Open Publication Hei 9-138945 an air is sucked in winding the magnetic tape, the sucked air exists as an air layer between laps of the magnetic tape forming a wound roll. And a taper influence decreases due to the air layer, whereby the winding way is difficult to be given when a diameter becomes larger.

Consequently, in order to solve the above problems is strongly requested a tape winding method that can manufacture tape in a simple process, where the winding disturbance is difficult to occur and a running stability is high.

### SUMMARY OF THE INVENTION

A first aspect of the present invention is a tape winding method that comprises a winding process for winding tape on a periphery of a hub by rotating the hub so that one end surface of a wound roll, which consists of the tape having a base film and being wound, becomes concave; and a heating treatment process for performing a heating treatment for the wound roll within a predetermined temperature range just under a glass transition temperature of the base film.

Because when in accordance with such the tape winding method for winding the tape on the periphery by rotating the hub, the tape is wound on the periphery of the hub by rotating the hub so that the one end surface of the wound roll, where the tape having the base film is wound, becomes concave (winding process), and then, the heating treatment is performed for the wound roll within the predetermined temperature range just under the glass transition temperature of the base film (heating treatment process), a predetermined bow is given to the tape.

And in accordance with the tape where the predetermined bow is given, even when the tape is pulled out of the wound roll and then wound in another tape reel, a winding disturbance becomes difficult to occur. In addition, because the predetermined bow is given to the tape, a running stability becomes high in a tape drive and the like.

A second aspect of the present invention is, in the winding process of the first aspect of the invention, to wind tape while pushing a tape surface of an outmost periphery out of wound tape on the hub with a pressure distribution that becomes a maximum pressure at one end side, which is upper than middle in a lateral direction of the tape.

Because in accordance with such the tape winding method tape tension occurs in a maximum tension distribution at the one end side, which is upper than the middle in the lateral direction of the tape, corresponding to the pressure distribution by winding the tape while the tape surface of the outmost periphery out of the wound tape on the hub is pushed with the pressure distribution that becomes the maximum pressure at the one end side, which is upper than the middle in the lateral direction of the tape, the one end surface of the wound roll can be made concave.

In addition, an air accompanying the tape is mainly exhausted from the other end side by pushing the tape surface of the outmost periphery with the pressure distribution that becomes the maximum pressure at the one end side, which is upper than the middle in the lateral direction of the tape. Accordingly, an air layer does not almost exist between laps of the tape of the wound roll. Thus, for example, the tape becomes difficult to be displaced by an impact during transportation.

A third aspect of the present invention is, in the winding process of the second aspect of the invention, that a roller for pushing the tape surface of the outmost periphery pushes the one end side of the tape surface of the outmost periphery with one end side of the roller by moving to the one end side of the tape while tilting as it recedes from the hub to an outside in a radial direction thereof.

Because in accordance with such the tape winding method the roller for pushing the tape surface of the outmost periphery pushes the one end side of the tape surface of the outmost periphery with the one end side of the roller by moving to the one end side of the tape while tilting as it recedes from the hub to the outside in the radial direction thereof and thereby the one end side of the tape surface of the outmost periphery is pushed by the one end side of the roller with the pressure distribution that becomes a maximum pressure at one end side, which is upper than middle in a lateral direction of the tape surface, one end surface of a wound roll can be made concave.

A fourth aspect of the present invention is, in the winding process of the second aspect of the invention, that a roller pushes the one end side of the tape surface of the outmost periphery with one end side of the roller by the hub moving to the one end side of the tape while tilting for the roller for pushing the tape surface of the outmost periphery as it recedes from the roller to an outside in a radial direction thereof.

Because in accordance with such the tape winding method the roller pushes the one end side of the tape surface of the outmost periphery with the one end side of the roller by the hub moving to the one end side of the tape while tilting for the roller for pushing the tape surface of the outmost periphery as it recedes from the roller to the outside in the radial direction thereof and thereby the one end side of the tape surface of the outmost periphery is pushed by the one end side of the roller with a pressure distribution that becomes a maximum pressure at one end side, which is upper than middle in a lateral direction of the tape, one end surface of a wound roll can be made concave.

A fifth aspect of the present invention is, in any winding process of the first to fourth tape winding methods of the invention, that a winding guide having a convex guide surface is provided at one end side of the hub and the tape is wound along the guide surface.

Because in accordance with such the tape winding methods the winding guide having the convex guide surface is provided at the one end side of the hub and thereby the tape is wound along the guide surface, one end surface of a wound roll can be made concave.

A sixth aspect of the present invention is, in any winding process of the second to fourth tape winding methods of the invention, that the winding process utilizes any hub and winds the tape, wherein a taper, whose one end side becomes a smaller diameter, is formed on a periphery of the hub, and wherein a desired taper is formed as a result of the hub being deformed by tightening force occurring by winding the tape.

Because in accordance with such the tape winding methods an air accompanying tape is exhausted, thereby an air layer does not almost exist between laps of the tape of a wound roll. Thus the tape becomes easy to be elongated at a larger diameter side opposite to a smaller diameter side of the taper due to the tightening force toward an inner side occurring within the wound roll. Therefore, a predetermined bow becomes easy to be given to the tape.

A seventh aspect of the present invention is, in any of the tape winding methods of the first to sixth aspects of the invention, that the heating treatment process is performed under a humidified condition.

Because in accordance with such the tape winding methods the heating treatment process is performed under the humidified condition, a base film becomes easy to be elongated. Accordingly, a predetermined bow becomes easy to be given.

### BRIEF DESCRIPTION OF THE DRAWINGS

FIG. 1 is a perspective view showing a general configuration of a winding apparatus used in a method for winding tape related to a first embodiment of the present invention.
FIG. 2 is a perspective view showing a heating treatment unit used in a method for winding tape related to the first embodiment.
FIG. 3A is a partial section view schematically showing a pushing situation of a touch roller at an early stage of winding at an X-X section shown in FIG. 1; FIG. 3B is a partial section view schematically showing a pushing situation of the touch roller at an intermediate stage where the winding further proceeds after FIG. 3A.
FIG. 4A is a partial plan view schematically showing tape tension generated in magnetic tape MT at the intermediate stage of the winding shown in FIG. 3B; FIG. 4B is a partial section view schematically showing a pushing situation of the touch roller at a late stage where the winding still further proceeds.
FIG. 5A is a perspective view showing a wound roll after winding; FIG. 5B is a Y-Y section view of the wound roll shown in FIG. 5A.
FIG. 6 is an enlarged view partially showing the magnetic tape MT pulled out of a wound roll after a heating treatment.
FIG. 7 is a perspective view showing a general configuration of a winding apparatus used in a method for winding tape related to a second embodiment of the present invention.
FIG. 8A is a partial section view schematically showing a winding situation at an early stage of winding at a Z-Z section shown in FIG. 7; FIG. 8B is a partial section view schematically showing a winding situation at an intermediate stage where the winding further proceeds after FIG. 8A.
FIG. 9A is a plan view schematically showing a general configuration of a winding apparatus used in a method for winding tape and a winding situation at an early stage related to a third embodiment of the present invention; FIG. 9B is a plan view schematically showing a winding situation at a late stage where the winding further proceeds after FIG. 9A.
FIG. 10 is a perspective view of a hub used in a method for winding tape related to a fourth embodiment of the present invention.
FIG. 11 is a section view of a wound roll where the magnetic tape MT is wound on the hub shown in FIG. 10.
FIGS. 12A and 12B are partial section views showing winding situations when using a variation example of the touch roller related to the first embodiment.
FIGS. 13A and 13B are partial section views showing winding situations when using another variation example of the touch roller related to the first embodiment.
FIGS. 14A and 14B are partial section views showing winding situations when using still another variation example of the touch roller related to the first embodiment.

### DESCRIPTION OF THE PREFERRED EMBODIMENTS

Here will be described embodiments of the present invention in detail, referring to appended drawings. Meanwhile, in each description of the embodiments a same symbol will be appended with respect to a same component and a tautological description will be omitted.

### [First Embodiment]

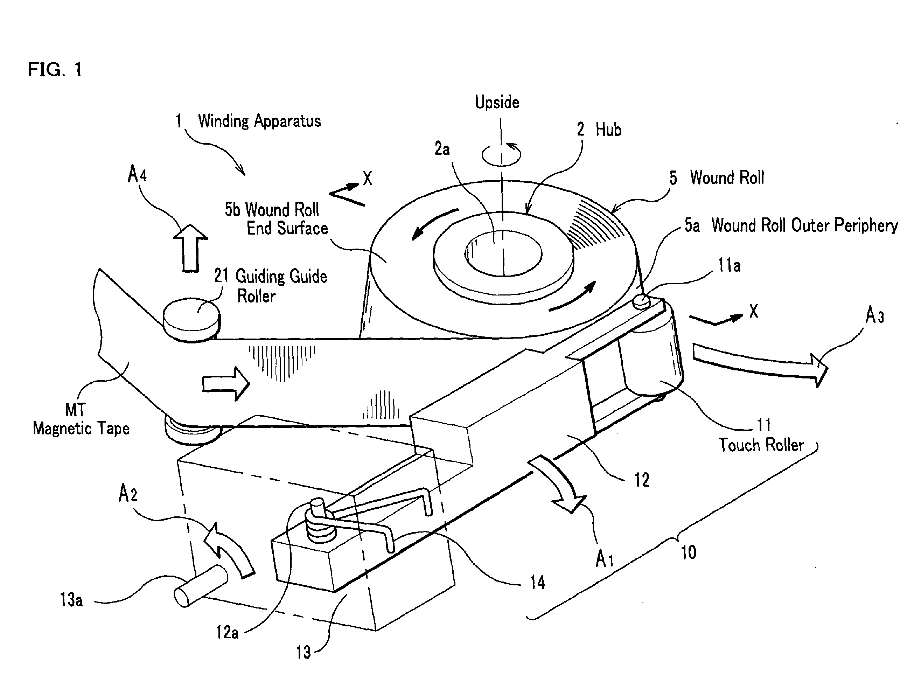

A tape winding method related to a first embodiment of the present invention will be described, referring to FIGS. 1 to 6.

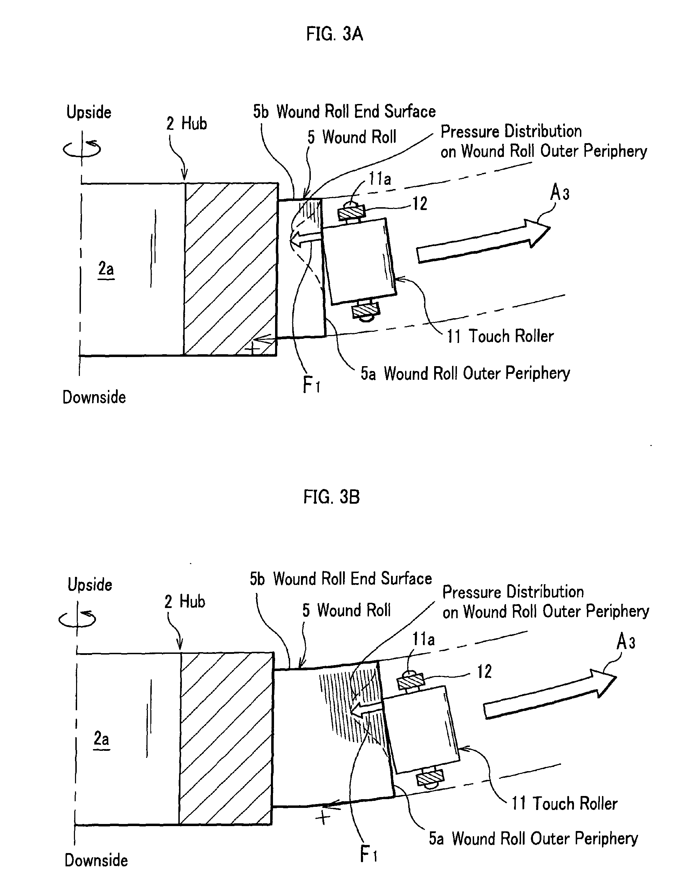

Meanwhile, in the first embodiment, as shown in FIG. 1, an axial direction of a hub 2 is made an up/down direction, one end side thereof (upside shown in FIG.1) is set the upside, the other end side (see FIGS. 3A, 3B, and the like) is set a downside, and magnetic tape MT is assumed to be wound on the hub 2 so that a wound roll end surface 5b at the upside of a wound roll 5 becomes concave. A touch roller 11 is also assumed to be same as above.

First, a configuration of a winding apparatus will be described, referring to FIG. 1.

As shown in FIG. 1, a winding apparatus 1 has the hub 2 for winding the magnetic tape MT and the touch roller 11, and is configured by comprising: a wound roll outer surface push means 10 for pushing a wound roll outer periphery 5a (tape surface of an outmost periphery), which is a periphery of the wound roll 5 that consists of the magnetic tape MT, which is wound; a guiding guide roller 21 for guiding the magnetic tape MT to a winding position; and a guiding guide roller movement mechanism (not shown) for moving the guiding guide roller 21.

In the first embodiment, as the hub 2, one whose figuration is cylindrical is used. A hub hole 2a is formed on an axial line of the hub 2, and inner teeth (not shown), which engage a spindle (not shown) of a tape motor unit for rotating the hub 2, are protrudingly provided on an inner periphery of the hub hole 2a.

The wound roll outer surface push means 10 is configured by comprising: the touch roller 11 for pushing the wound roll outer periphery 5a while rolling thereon; a touch arm 12 (roller support member) for freely rotatably supporting the touch roller 11 by a shaft at one end; a platform 13 for freely rotatably supporting the touch arm 12; a torsion spring 14 (energizing means) provided between the touch arm 12 and the platform 13; a platform rotational movement shaft member 13a, which is penetrated to a predetermined position of the platform 13 and becomes a shaft; and a platform rotational movement mechanism (not shown) for rotationally moving the platform 13 around the platform rotational movement shaft member 13a.

The touch roller 11 is a member whose figuration is cylindrical and a through hole is formed on a central axial line thereof. In the through hole is inserted a touch roller rotational shaft member 11a.

In addition, the touch roller 11 is formed of an elastic material having a predetermined elasticity. Accordingly, even when the wound roll outer periphery 5a becomes eccentric as the wound roll 5 rotates, the touch roller 11 can preferably follow it and behavior of lateral and radial directions of the magnetic tape MT is designed to be suppressed. Taking the above into consideration, for example, a rubber material such as urethane can be cited as the elastic material of which the touch roller 11 is formed.

Furthermore, a height position of the touch roller 11 is set so that it can push the wound roll outer periphery 5a with a pressure distribution, which becomes a maximum pressure at the upside (one end side), which is upper than middle in a lateral direction of the magnetic tape MT. That is, by tilting the touch roller 11 for the wound roll outer periphery 5a by means of a rotational movement of the platform 13 as described later, the wound roll outer periphery 5a can be pushed with the pressure distribution, which becomes the maximum pressure at the upside, which is upper than the middle in the lateral direction of the magnetic tape MT. In addition, by tilting the touch roller rotational shaft member 11a in advance, it is available to make the wound roll outer periphery 5a pushed with the pressure distribution, which becomes the maximum pressure at the upside, which is upper than the middle in the lateral direction of the magnetic tape MT.

Still furthermore, in order to regulate a position of lateral directions of the magnetic tape MT that comes in the touch roller 11, a guide roller with a flange may be provided at an upstream side of the touch roller 11.

At one end of the touch arm 12 that forks into two the touch roller rotational shaft member 11a is fixed. And the touch roller 11 is freely rotatably fit on the touch roller rotational shaft member 11a.

In addition, the touch arm 12 is freely rotatably supported by the platform 13 through a touch arm rotational shaft member 12a, which is penetrated to the other end of the touch arm 12 (see an arrow mark A₁ in FIG. 1).

The torsion spring 14 is provided between the touch arm 12 and the platform 13. And the touch roller 11 is energized in a rotational axial direction of the hub 2 by the torsion spring 14 through the touch arm 12. Here, although in the first embodiment the torsion spring 14 is used, taking a volume and the like into consideration, the present invention is not limited thereto and other elastic members having elasticity, for example, a tension coil spring may be used as needed.

In addition, it is preferable to appropriately change a spring modulus of the torsion spring 14, depending on a width, thickness, and the like of the magnetic tape MT, and to adjust pushing force of the touch roller 11 as needed.

In the present invention the platform rotational movement mechanism (not shown) is not specifically limited if it rotationally moves the platform 13 around the platform rotational movement shaft member 13a (see an arrow mark A₂ in FIG. 1), and for example, the platform rotational movement mechanism can be configured by combining a servo motor with a gear mechanism.

The guiding guide roller 21 is something for guiding the magnetic tape MT and can be used as needed by being selected from a known guide roller with a flange.

In the present invention the guiding guide roller movement mechanism (not shown) is not specifically limited if it moves the guiding guide roller 21 to the upside, and for example, the guiding guide roller movement mechanism can be configured by combining a servo motor with a gear mechanism such as a rack and pinion.

Meanwhile, although in the first embodiment as shown in FIG. 1, a hub with a flange, which is generally used for a magnetic tape cartridge, is not described, it goes without saying that the hub with the flange is applicable instead of the hub 2.

Next, a heating treatment unit used for the first embodiment will be described.

As shown in FIG. 2, a heating treatment unit 25 is freely settable in temperature and not specifically limited if the wound roll 5 can be heated at a predetermined temperature: For example, a known constant temperature bath is usable. In addition, the heating treatment unit 25 is also preferable to be freely settable in humidity.

Subsequently, the tape winding method related to the first embodiment of the present invention will be described.

The tape winding method related to the first embodiment comprises a winding process for winding the magnetic tape MT on the hub 2 by the winding apparatus 1 and a heating treatment process for performing a heating treatment for the wound roll 5 by the heating treatment unit 25.

First, in the tape winding method related to the first embodiment the magnetic tape MT, which is a wound object, will be described.

The magnetic tape MT has generally a non-magnetic base film (support body) and a magnetic layer formed on a base film.

The magnetic layer is formed by coating a magnetic paint, where a magnetic powder, a bonding agent, an organic solvent, and the like are mixed and adjusted until the magnetic powder is uniformly dispersed on a surface of the base film. Otherwise, the magnetic layer is formed by depositing a ferromagnetic material such as metal and alloy by means of methods such as a vacuum deposition and a sputtering.

The magnetic powder can be used by being selected as needed, for example, from ferromagnetic ferrite powder such as α -Fe₂O₃, Fe₃O₄, and cobalt deposited α -Fe₂O₃; ferromagnetic chromium dioxide; metal such as Fe, Co, and Ni; ferromagnetic metal powder consisting of alloy containing these; and hexagonal ferrite particulate like a hexagonal plate and the like.

As the bonding agent, can be used polymers such as urethane, vinyl chloride, vinyl acetate, vinyl alcohol, vinylidene chloride, acrylic ester, styrene, butadiene, and acrylic nitrile; copolymers where more than one kind of the polymers is combined; polyester resin; epoxy resin; and the like.

As the organic solvent, can be used ethers, esters, kinds of ketone, aromatic hydrocarbon, fatty hydrocarbon, and chlorinated hydrocarbon.

As a material of the base film, for example, can be used polyesters such as polyethylene terephthalate (PET) and polyethylene naphthalate (PEN); polyolefins such as polypropylene; cellulose derivatives such as nitrocellulose; and polymers such as polyamide, polyvinyl chloride, polycarbonate, and aramid.

Out of these the polyesters are low in cost and also excellent in workability and mechanical properties. In addition, the polyethylene naphthalate (PEN) is more excellent in strength, rigidity, and heat resistance than the polyethylene terephthalate (PET). Furthermore, the aramid is preferable to be added when considering the heat resistance.

### a) Winding Process

A winding process will be described, making such the magnetic tape MT an object.

After making the magnetic tape MT pass via the guiding guide roller 21, attach one end of the magnetic tape MT on a periphery of the hub 2 by an appropriate means. And rotate the spindle (not shown), thereby rotate the hub 2, and start to wind the magnetic tape MT.

On the other hand, the platform 13 rotationally moves around the platform rotational movement shaft member 13a by the platform rotational movement mechanism (see an arrow mark A₂ in FIG. 1), depending on winding of the magnetic tape MT.

A winding situation will be described in more detail.

Although during winding of the magnetic tape MT the touch roller 11 is energized to a center side of the hub 2 by the torsion spring 14, the touch roller 11 is pushed to an outside in a radial direction thereof by the wound roll 5 as the wound roll 5 becomes fatter by the winding. Accordingly, as it becomes fatter by the winding, the touch arm 12 opens outside, making the touch arm rotational movement member 12a an axis (see the arrow mark A₁ in FIG.1).

On the other hand, because as the wound roll 5 becomes fatter by the winding, the platform 13 rotationally moves (see the arrow mark A₂ in FIG. 1), the touch roller 11 results in moving like an arc (see arrow marks A3 in FIGS. 1, 3A, 3B, 4A, and 4B) to the upside (one end side) of the magnetic tape MT while tilting within an approximate X-X section (section in a radial direction) shown in FIG. 1 as the touch roller 11 recedes from the hub 2 to the outside in the radial direction thereof.

Thus, as shown in FIG. 3A of a winding early stage and FIG. 3B of a winding intermediate stage, the wound roll outer periphery 5a results in being pushed by the upside (one end side) of the touch roller 11 with a pressure distribution that becomes a maximum pressure at the upside (one end side), which is upper than middle in the lateral direction of the magnetic tape MT. In FIGS. 3A and 3B pushing force by the touch roller 11 is schematically shown in F₁.

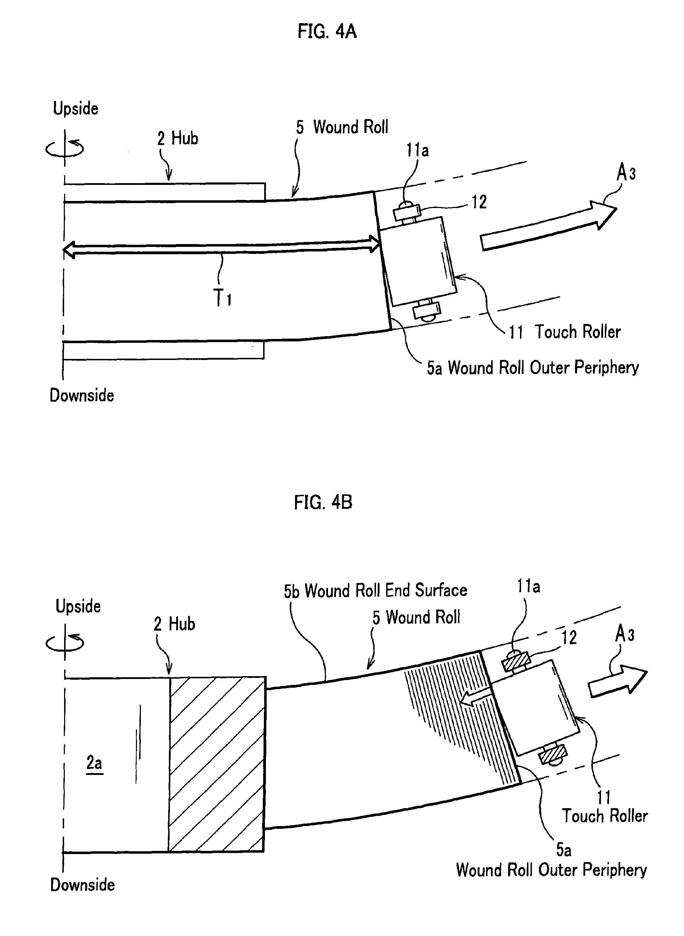

When the hub 2 rotates and the winding of the magnetic tape MT proceeds with the wound roll outer periphery 5a being pushed with the pressure distribution that becomes the maximum pressure at the upside, which is upper than the middle in the lateral direction of the magnetic tape MT, tape tension T1 occurs, as shown in FIG. 4A, corresponding to the pressure distribution, especially in the magnetic tape MT of an outmost periphery of the wound roll 5 in a distribution that becomes higher at the upside than the middle. Thus, the magnetic tape MT results in being wound while moving to the upside.

Because the guiding guide roller 21 moves to the upside by the guiding guide roller movement mechanism (not shown), corresponding to the magnetic tape MT moving to the upside, the roller 21 can preferably guide the magnetic tape MT to a winding position with guiding it in the lateral direction thereof.

In addition, by the wound roll outer periphery 5a being pushed with the pressure distribution that becomes the maximum pressure at the upside, which is upper than the middle in the lateral direction of the magnetic tape MT, by means of the touch roller 11, an air accompanying the magnetic tape MT results in being exhausted mainly from the downside of the magnetic tape MT. Accordingly, an air layer does not almost exist between laps of the magnetic tape MT, which forms the wound roll 5.

As shown in FIG. 4B, even when the wound roll 5 becomes fatter by winding, the winding can preferably be continued by rotationally moving the platform 13 and moving the guiding guide roller 21.

And after winding a predetermined amount of the magnetic tape MT, stop a rotation of the spindle (not shown) and finish the winding process.

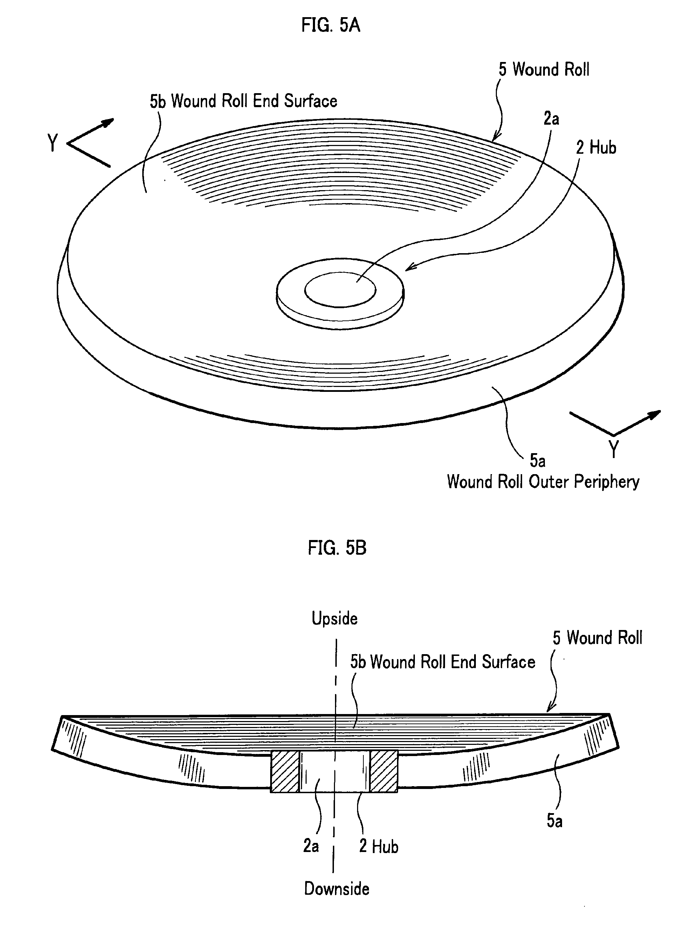

Thus, the wound roll 5 shown in FIG. 5A and 5B can be manufactured.

### b) Heating Treatment Process

Subsequently, a heating treatment process will be described.

Put the wound roll 5, which consists of the magnetic tape MT that is wound, in the heating treatment unit 25 and perform a heating treatment at a predetermined temperature for a predetermined hour. Here, set the predetermined temperature at a temperature just under a glass transition temperature of the material of the base film forming the magnetic tape MT. In more detail, set the temperature lower than that of the glass transition temperature of the material of the base film forming the magnetic tape MT. Meanwhile, such the heating treatment is generally called annealing and is performed to heat a polymer molded material, gradually cool it, thereby lessen its strain, and to heat a crystalline polymer to a preferable crystallization temperature and proceed a crystallization.

Here, because when, for example, using polyethylene terephthalate as the material of the base film forming the magnetic tape MT, a glass transition temperature of the polyethylene terephthalate (PET) is 60 to 70 degrees Celsius, preferably set the predetermined temperature at 40 to 69 degrees Celsius and more preferably at 50 to 65 degrees Celsius. In addition, because when using polyethylene naphthalate as the material of the base film forming the magnetic tape MT, a glass transition temperature of the polyethylene naphthalate (PEN) is 110 to 120 degrees Celsius, set the predetermined temperature at 40 to 113 degrees Celsius. When using aramid as the material of the base film forming the magnetic tape MT, set the predetermined temperature at 40 to 120 degrees Celsius. Meanwhile, when setting the predetermined temperature at 40 to 120 degrees Celsius, a heating treatment speed can be made faster.

Furthermore, because the material of the base film becomes easy to deform in a short hour, it is preferable to make an inside of the heating treatment unit 25 a predetermined humidity depending on the material of the base film. For example, when using the polyethylene terephthalate (PET) as the material of the base film, it is preferable to set the humidity at 55 to 80 %.

By performing the heating treatment of the wound roll 5 for the predetermined hour at such the temperature, a shape of the wound roll 5 wound on the hub 2 can be made to be effectively memorized in the magnetic tape MT. That is, a winding way can be given to the magnetic tape MT.

In addition, by making the predetermined temperature just under the glass transition temperature of the material of the base film, while suppressing an extreme heat shrinkage thereof a residual stress can be reduced with alleviating a non-crystalline portion within the material of the base film, thereby damage becoming difficult to be given to the magnetic tape MT.

After a lapse of the predetermined hour, take the wound roll 5 out of the heating treatment unit 25, finish the heating treatment process, and gradually cool the wound roll 5.

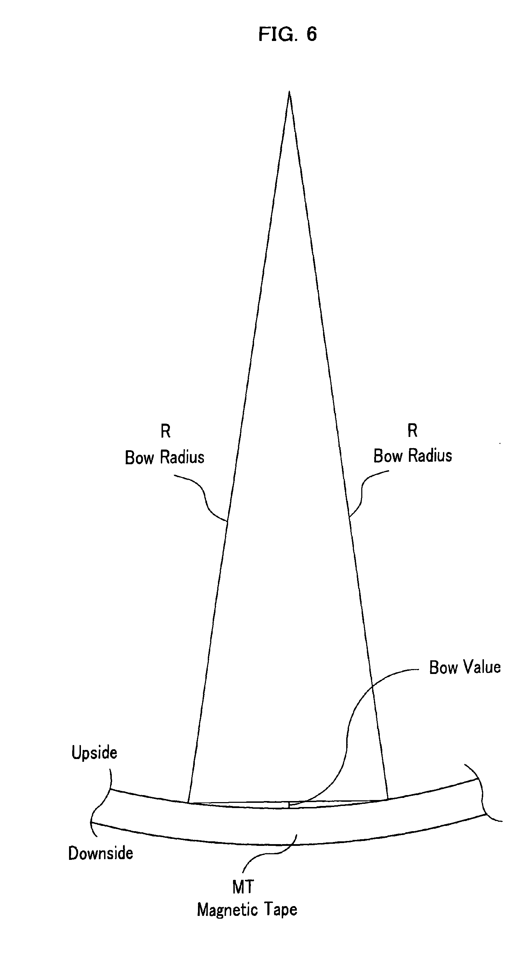

When pulling the magnetic tape MT out of the wound roll 5 where the heating treatment is thus performed, as shown in FIG. 6, the tape MT is wholly constantly curved to the upside of the lateral direction thereof. A bow radius R and bow value of the magnetic tape MT is adjusted as predetermined by appropriately setting a concave degree of the wound roll end surface 5b of the wound roll 5. When the magnetic tape MT is constantly curved like this, it becomes easy to be regulated in lateral directions thereof during running in a tape drive, thereby a running performance being improved.

Furthermore, even when after pulling the magnetic tape MT out of the wound roll 5, winding the magnetic tape MT on another hub (not shown), a winding disturbance is difficult to occur because an approximate constant bow is given to whole of the magnetic tape MT.

Thus described, in accordance with the tape winding method related to the first embodiment of the present invention a constant bow can be given to the magnetic tape MT across a whole length thereof by a simple process.

Such the tape winding method related to the first embodiment is, for example, applicable to such a case of winding the magnetic tape MT slit from a web and manufacturing a so called pancake and the like in a manufacturing line of the magnetic tape MT.

### [Second Embodiment]

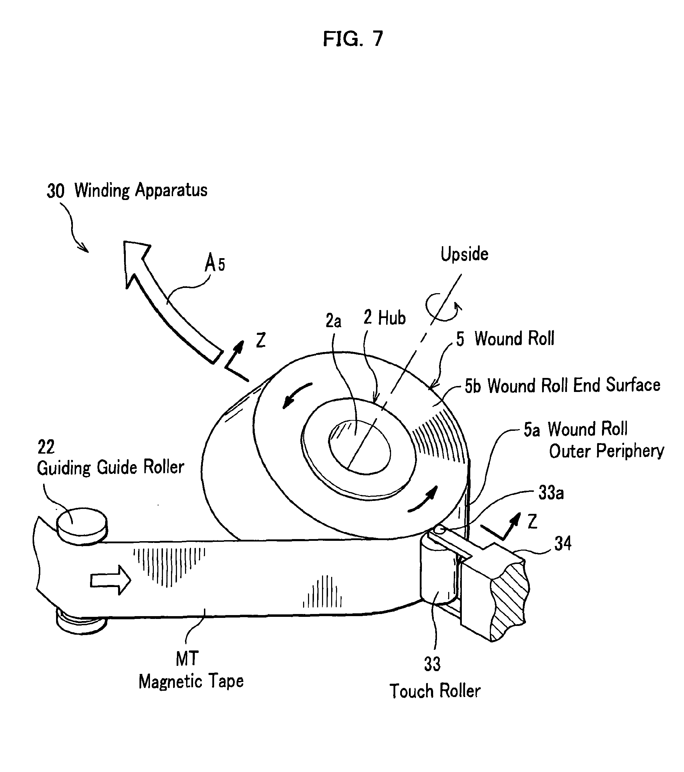

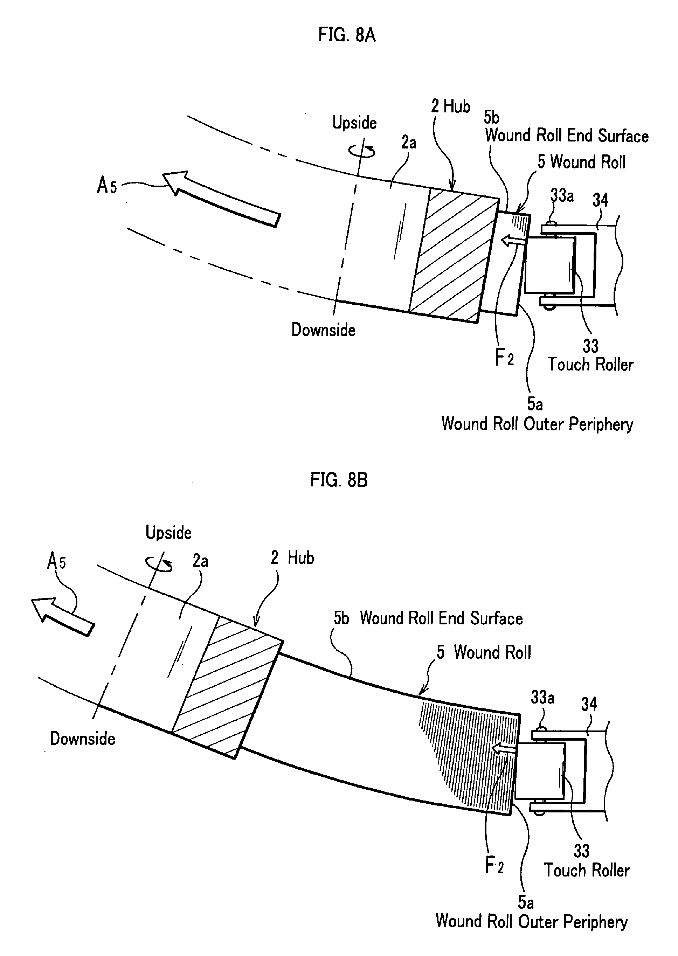

Subsequently, a tape winding method related to a second embodiment of the present invention will be described, referring to FIGS. 7, 8A, and 8B as needed.

The tape winding method related to the second embodiment is different in nothing but a winding process, compared to the tape winding method related to the first embodiment. In more detail, are different a configuration of a winding apparatus and a method for winding the magnetic tape MT on the hub 2. In the first embodiment the magnetic tape MT is wound and the touch roller 11 is moved like an arc; whereas, in the second embodiment the magnetic tape MT is wound while the hub 2 is moved like an arc for a touch roller 33 at a fixed position.

First, the configuration of the winding apparatus, which is used in the tape winding method related to the second embodiment, will be described, and then, the winding process by the winding apparatus will be described.

As shown in FIG. 7, a winding apparatus 30 related to the second embodiment has the hub 2, the touch roller 33, a guiding guide roller 22 for guiding the magnetic tape MT to the hub 2 with regulating the tape MT in lateral directions, and a spindle (not shown), and is configured by comprising a spindle movement mechanism, which moves the spindle (not shown) like an arc within an approximate Z-Z section (within a section in a radial direction of the hub 2).

The touch roller 33 is freely rotatably supported by a touch arm 34 through a touch roller rotational shaft member 33a. The touch arm 34 is, for example, fixed at a panel of a tape winder (not shown). Accordingly, the touch roller 33 rotates at a same position.

The spindle movement mechanism (not shown) is movable like the arc within the approximate Z-Z section (see an arrow mark A₅ in FIG. 7) and comprises an energizing means for energizing the wound roll outer periphery 5a of the wound roll 5 to the touch roller 33. To be more precise, for example, the spindle movement mechanism can be configured by combining energizing means such as an arc guide rail (not shown) of a predetermined curvature for guiding a movement of the spindle (not shown), a spring, and a weight.

In addition, a height position of the wound roll 5 is set so that the touch roller 33 can push the wound roll outer periphery 5a with a pressure distribution that becomes a maximum pressure at an upside, which is upper than middle of a lateral direction of the magnetic tape MT.

The guiding guide roller 22 is usable same as in the first embodiment by being selected from a known guide roller as needed. In addition, although because in the first embodiment a winding position moves to the upside as the magnetic tape MT is wound, the guiding guide roller movement mechanism (not shown) is provided, in the second embodiment the touch roller 33 rotates at the fixed position, the hub 2 is moved like an arc, and thereby the winding position does not move: Therefore, no guiding guide roller movement mechanism is requested.

Subsequently, the winding process of the tape winding method related to the second embodiment will be described.

As shown in FIG. 8A, move the spindle (not shown) within the approximate Z-Z section like the arc by the spindle movement mechanism (not shown) as the magnetic tape MT is wound. Thus the hub 2 results in moving like the arc to the upside while tilting as the hub 2 recedes from the touch roller 33 to an outside in a radial direction thereof.

Thus the touch roller 33 results in pushing the wound roll outer periphery 5a by the upside thereof with a pressure, which becomes a maximum pressure at the upside, which is upper than middle in the lateral direction of the magnetic tape MT. Meanwhile, in FIGS. 8A and 8B pushing force by the touch roller 33 is schematically shown in F₂.

Accordingly, same as in the first embodiment, the magnetic tape MT results in being wound while moving to the upside, and thereby the wound roll 5, where the wound roll end surface 5b of the upside is concave, can be obtained.

### [Third Embodiment]

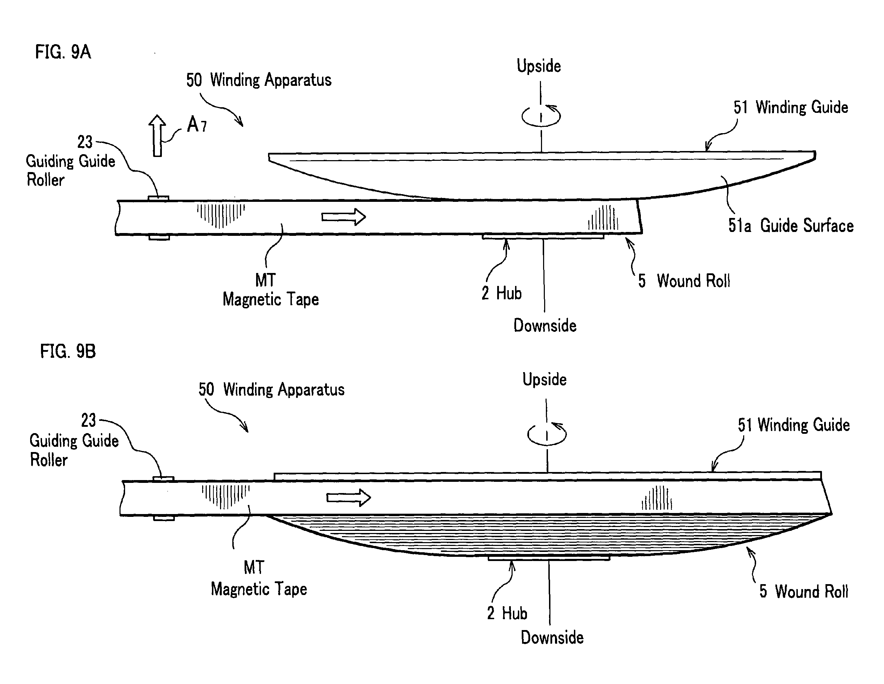

Subsequently, a tape winding method related to a third embodiment of the present invention will be described, referring to FIGS. 9A and 9B.

The tape winding method related to the third embodiment is different in nothing but a winding process, compared to the tape winding method related to the first embodiment. In more detail, are different a configuration of a winding apparatus and a method for winding the magnetic tape MT on the hub 2. The third embodiment does not use the wound roll outer periphery push means 10 related to the first embodiment, attaches a winding guide 51 having a guide surface 51a to an upside end surface of the hub 2, and moves a guiding guide roller 23 to an upside as the magnetic tape MT is wound so that an upper edge of the magnetic tape MT is wound along the guide surface 51a (see an arrow mark A₇ in FIG. 9A).

First, the configuration of the winding apparatus, which is used in the tape winding method related to the third embodiment, will be described, and then, the winding process by the winding apparatus will be described.

As shown in FIG. 9A, a winding apparatus 50 related to the third embodiment is configured by comprising: the hub 2, the winding guide 51 having the guide surface 51a, the guiding guide roller 23 for guiding the magnetic tape MT to the hub 2 with regulating the tape MT in lateral directions thereof, and a guiding guide roller movement mechanism (not shown) for moving the guiding guide roller 23 to the upside.

The winding guide 51 has the guide surface 51a, which is convex, to be more precise, for example, taper or partially spherical, for guiding winding of the magnetic tape MT. And the winding guide 51 is fixed by an appropriate means with making the guide surface 51a toward a hub 2 side. Accordingly, when the hub 2 rotates by the spindle (not shown), the hub 2 and the winding guide 51 are designed to integrally rotate.

Accordingly, the winding apparatus 50 related to the third embodiment does not request the touch roller 11 for pushing the wound roll outer periphery 5a and can be easily configured.

Subsequently, the tape winding method related to the third embodiment will be described.

As shown in FIG. 9A, wind the magnetic tape MT with making the hub 2 rotate same as in the first embodiment. Move the guiding guide roller 23 by the guiding guide roller movement mechanism (not shown) so that the upper edge of the magnetic tape MT is wound along the guide surface 51a as the magnetic tape MT is wound (see the arrow mark A₇ in FIG. 9A).

When winding the magnetic tape MT in such the state, as shown in FIG. 9B, the wound roll 5 in a state where a wound roll end surface of an upside is along the guide surface 51a can be obtained. That is, the wound roll 5, whose wound roll end surface of the upside is concave, can be obtained.

### [Fourth Embodiment]

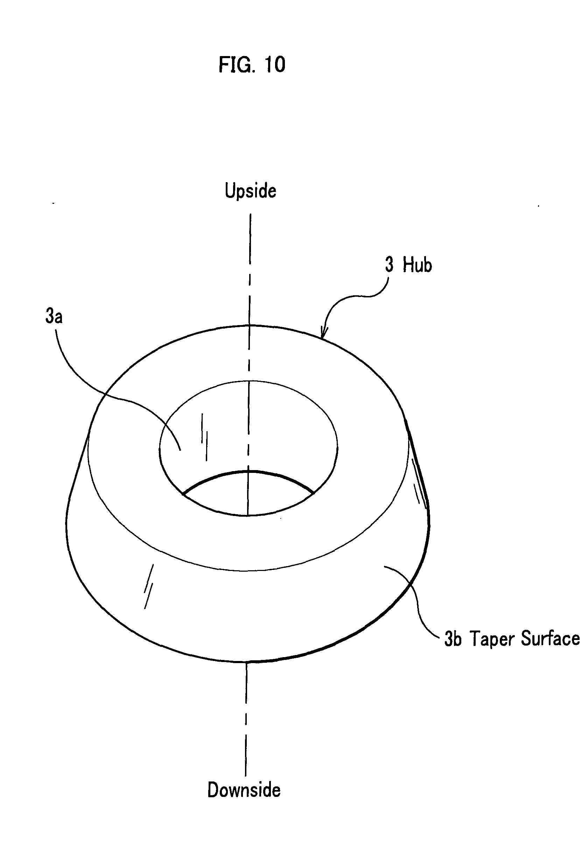

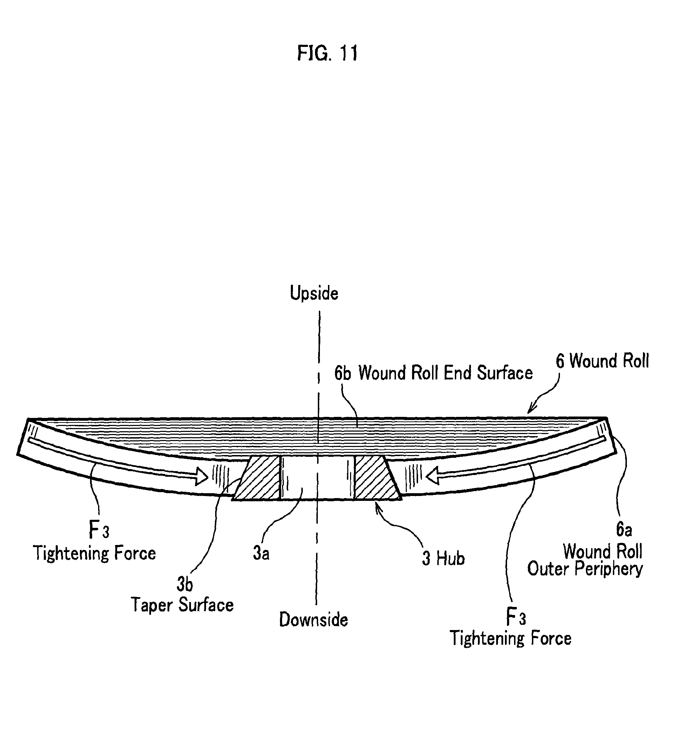

Next, a tape winding method related to a fourth embodiment will be described, referring to FIGS. 10 and 11.

The tape winding method related to the fourth embodiment is characterized in that a hub shown in FIG. 10 is used instead of the hub 2 used in the first embodiment.

As shown in FIG. 10, a hub 3 has a hub hole 3a on an axial line, and furthermore, at an outer periphery of the hub 3 is formed a taper surface 3b, where an upside thereof is a smaller diameter and a downside thereof is a larger diameter. A taper angle is set as needed, depending on a concave degree of a wound roll, that is, a bow degree given to the magnetic tape MT.

Subsequently, making a side, namely, an upside of the hub 3, where the magnetic tape MT is curved, the smaller diameter, wind the magnetic tape MT by the tape winding method related to the first embodiment. Thus a wound roll 6 having a section shown in FIG. 11 can be obtained.

The wound roll 6 is concave in a wound roll end surface 6b of an upside thereof same as the wound roll 5. Here, usually within the wound roll 6 occurs tightening force F₃ toward a center side. In addition, in accordance with the tape winding method related to the first embodiment as described above, an air accompanying the magnetic tape MT is exhausted by the touch roller 11. Accordingly, an air layer does not almost exist between laps of the magnetic tape MT of the wound roll 6. Thus, without receiving an influence of the air layer, a base film of the magnetic tape MT becomes easy to elastically deform because the downside of the magnetic tape MT configuring the wound roll 6 is larger than the upside thereof in diameter due to the taper. Therefore, in the magnetic tape MT a bow becomes easy to be effectively given.

Thus, although for each of the preferred embodiments of the present invention each example is described, the invention is not limited to such the embodiments; each component described in the embodiments may also be appropriately combined without departing from the spirit and scope of the invention; and otherwise, for example, appropriate changes as below are available.

Although in each of the preferred embodiments the winding object is made the magnetic tape MT, the present invention is not limited thereto and may be applied to other tape and the like.

Although in the first embodiment, as shown in FIGS. 3A and 3B, the magnetic tape MT is wound so that the wound roll end surface 5b becomes like the arc in the X-X section, the section may also be taper (conical) if the wound roll end surface 5b is concave. In addition, the above is also same for the guide surface 51a of the winding guide 51.

Although in each of the embodiments the heating treatment process is performed in the heating treatment unit 25, otherwise, for example, the heating treatment may also be performed by making the wound roll 5 pass an inside of a continuous furnace kept at an predetermined temperature.

Although in the first and second embodiments the wound roll outer periphery 5a is pushed so as not to be damaged by each of the touch rollers 11 and 33 while they roll, each of the touch rollers 11 and 33 is not always requested to roll on the wound roll outer periphery 5a.

For example, by abutting a bar member, whose top end is covered with non-woven textile and the like, with a position of the upside upper than the middle in the lateral direction of the magnetic tape MT, it is also available to make the pressure distribution occur, which distribution becomes the maximum pressure at the upside that is upper than the middle of the magnetic tape MT.

Although in the first embodiment the wound roll outer periphery 5a is pushed by the touch roller 11 according to the elasticity of the torsion spring 14, otherwise, for example, it may also be pushed by forming a touch arm piston portion at the touch arm 12, providing an air cylinder for housing the touch arm piston portion, and pushing with the touch roller 11 through an air pressure within the air cylinder. Thus utilizing the air cylinder, an air pressure within the air cylinder can be monitored and thereby the wound roll outer periphery 5a can be pushed with a same pressure from a start to finish of winding.

Although in the third embodiment the winding guide 51 and the hub 2 integrally rotate with attaching the winding guide 51 to the hub 2, the winding guide 51 is not always requested to rotate and may also guide the magnetic tape MT while contacting the edge of the magnetic tape MT and the hub 2, which rotate.

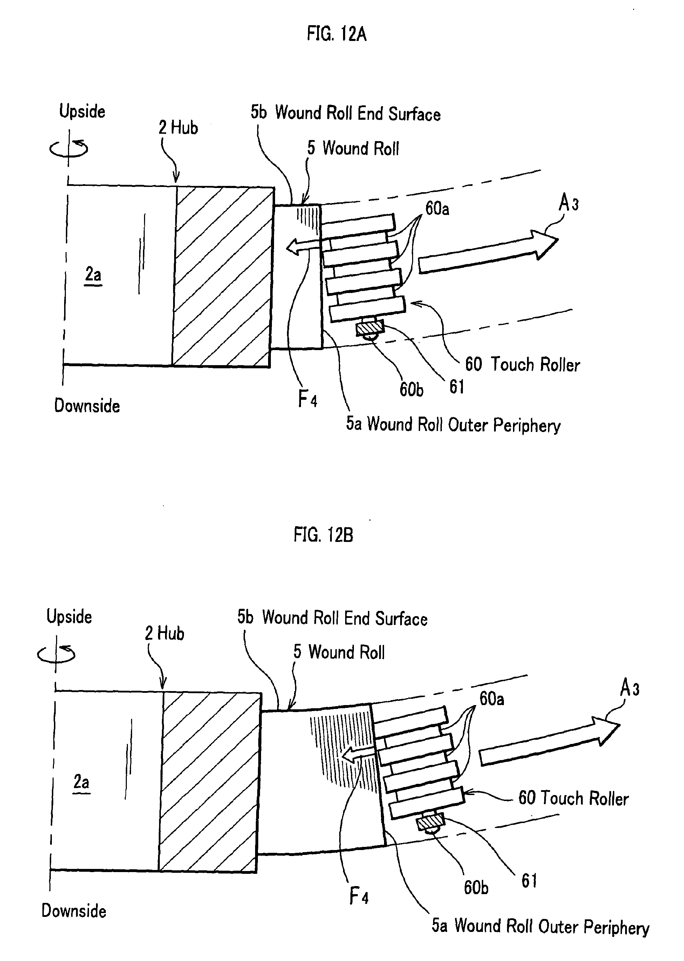

Although in the first embodiment using the cylindrical touch roller 11, the touch roller 11 is freely rotatably supported by the touch arm 12 at both sides of the touch roller 11, otherwise, for example, it is also available to make a one-side-support configuration as shown in FIG. 12A by using a touch roller 60, which has a plurality of grooves 60a in a peripheral direction, and being freely rotatably supported with the touch arm 61 through a touch roller rotational shaft member 60b at a downside (one side) of the touch roller 60.

In accordance with the touch roller 60 with such the grooves 60a an air, which is sucked between a periphery of the touch roller 60 and the wound roll outer periphery 5a, becomes easy to be exhausted from the plurality of the grooves 60a during pushing by the touch roller 60. Accordingly, even when the hub 2 is rotated at a high speed and winding of the magnetic tape MT proceeds (see FIG.12 B), the wound roll outer periphery 5a can be pushed without behavior of the touch roller 60 being disturbed.

In addition, the upside of the wound roll outer periphery 5a becomes easy to be pushed by supporting the touch roller 60 at one side thereof, the downside, with the touch arm 61. Meanwhile, in FIGS. 12A and 12B pushing force by the touch roller 60 is schematically shown in F₄. When the wound roll outer periphery 5a becomes easy to be pushed on the upside of the magnetic tape MT, a tape tension distribution occurs, wherein tension becomes higher at the upside in the lateral direction of the magnetic tape MT configuring the wound roll 5 (see FIG. 4A). Thus, even when force for pushing the wound roll outer periphery 5a is same, the magnetic tape MT of an outmost periphery becomes easy to move to the upside thereof. Therefore, the wound roll end surface 5b of the upside becomes a concave curved surface with a larger curvature and thereby becomes like a higher concavity. Accordingly, in the magnetic tape MT wound into such the wound roll a larger bow results in being given.

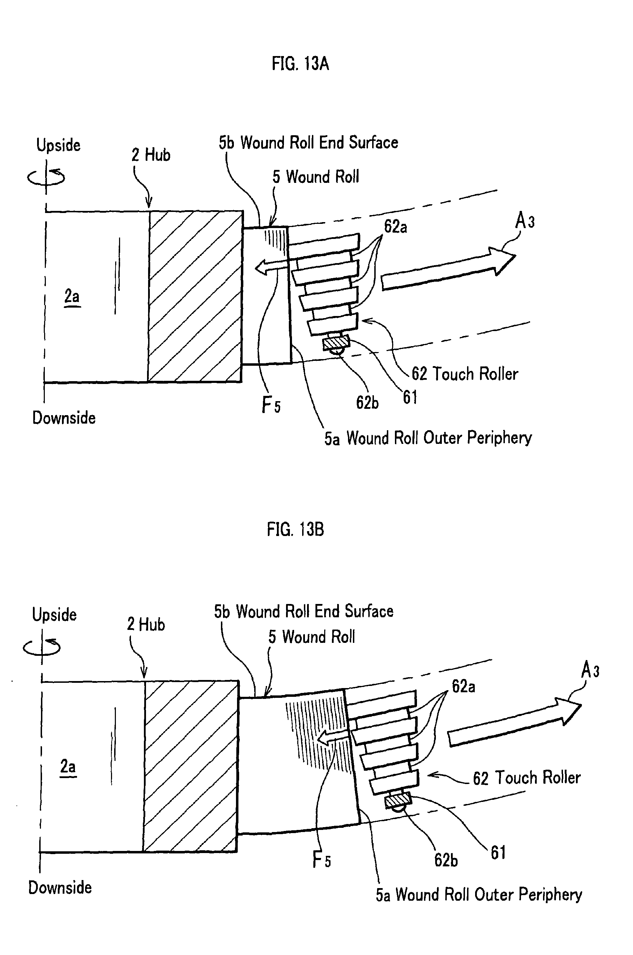

Furthermore, a touch roller 62 shown in FIGS. 13A and 13B may also be used instead of the touch roller 60 shown in FIGS. 12A and 12B. On a periphery thereof the touch roller 62 has a taper surface, whose upside becomes a large diameter; on the taper surface a plurality of grooves 62a are formed in a peripheral direction. And the touch roller 62 is freely rotatably supported at one side thereof, the downside, by the touch arm 61 through a touch roller rotational shaft member 62b.

In accordance with such the touch roller 62 the wound roll outer periphery 5a becomes easy to be pushed from a nearest position of the upside of the magnetic tape MT.

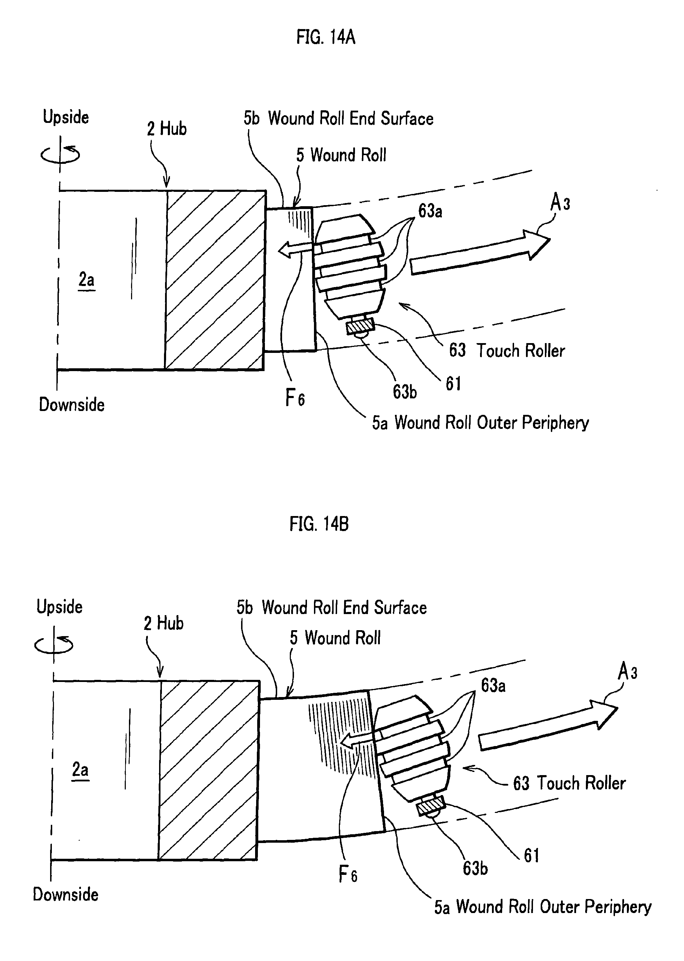

Still furthermore, a touch roller 63 shown in FIGS. 14A and 14B may also be used instead of the touch roller 60 shown in FIGS. 12A and 12B. The touch roller 63 is a figuration of a barrel (also called a crown roller) and on a periphery thereof a plurality of grooves 63a are formed. And the touch roller 63 is freely rotatably supported at one side thereof, the downside, by the touch arm 61 through a touch roller rotational shaft member 63b.

In accordance with such the touch roller 63 an air can be exhausted from both of the upside and downside of the magnetic tape MT, thereby the winding disturbance becoming difficult to occur.

## Claims

1. A tape winding method comprising:
a winding process for winding tape (M) on a periphery of a hub (2) by rotating said hub so that one end surface of a wound roll (5) becomes concave; and
a heating treatment process for performing a heating treatment for said wound roll within a predetermined temperature range just under a glass transition temperature of a base film,
wherein the wound roll comprises said tape, and wherein the tape has said base film and is wound.

2. A tape winding method according to claim 1, wherein tape is wound while a tape surface of an outmost periphery out of wound tape on said hub is pushed with a pressure distribution that becomes a maximum pressure at one end side, which is upper than middle in a lateral direction of said tape.

3. A tape winding method according to claim 2, wherein in said winding process a roller for pushing a tape surface of said outmost periphery pushes said one end side of the tape surface of the outmost periphery with one end side of said roller (11) by moving to said one end side of the tape surface while tilting as said roller recedes from said hub to an outside in a radial direction thereof.

4. A tape winding method according to claim 2, wherein in said winding process said hub pushes said one end side of a tape surface of said outmost periphery with one end side of a roller by moving to said one end side of the tape surface while tilting for said roller for pushing the tape surface of the outmost periphery as the hub recedes from the roller to an outside in a radial direction thereof.

5. A tape winding method according to claim 1, wherein in said winding process a winding guide having a convex guide surface is provided at one end side of said hub and said tape is wound along said guide surface.

6. A tape winding method according to claim 2, wherein in said winding process a winding guide having a convex guide surface is provided at one end side of said hub and said tape is wound along said guide surface.

7. A tape winding method according to claim 3, wherein in said winding process a winding guide having a convex guide surface is provided at one end side of said hub and said tape is wound along said guide surface.

8. A tape winding method according to claim 4, wherein in said winding process a winding guide having a convex guide surface is provided at one end side of said hub and said tape is wound along said guide surface.

9. A tape winding method according to claim 2, wherein said winding process utilizes any hub and winds said tape; wherein a taper, whose one end side becomes a smaller diameter, is formed on a periphery of said hub; and
wherein a desired taper is formed as a result of said hub being deformed by tightening force occurring by winding the tape.

10. A tape winding method according to claim 3, wherein said winding process utilizes any hub and winds said tape; wherein a taper, whose one end side becomes a smaller diameter, is formed on a periphery of said hub; and
wherein a desired taper is formed as a result of said hub being deformed by tightening force occurring by winding the tape.

11. A tape winding method according to claim 4, wherein said winding process utilizes any hub and winds said tape; wherein a taper, whose one end side becomes a smaller diameter, is formed on a periphery of said hub; and
wherein a desired taper is formed as a result of said hub being deformed by tightening force occurring by winding the tape.

12. A tape winding method according to claim 1, wherein a material of said base film is polyethylene terephthalate and said heating treatment process is performed at a humidity of 55 to 80 %.

13. A tape winding method according to claim 2, wherein a material of said base film is polyethylene terephthalate and said heating treatment process is performed at a humidity of 55 to 80 %.

14. A tape winding method according to claim 3, wherein a material of said base film is polyethylene terephthalate and said heating treatment process is performed at a humidity of 55 to 80 %.

15. A tape winding method according to claim 4, wherein a material of said base film is polyethylene terephthalate and said heating treatment process is performed at a humidity of 55 to 80 %.

16. A tape winding method according to claim 5, wherein a material of said base film is polyethylene terephthalate and said heating treatment process is performed at a humidity of 55 to 80 %.

17. A tape winding method according to claim 6, wherein a material of said base film is polyethylene terephthalate and said heating treatment process is performed at a humidity of 55 to 80 %.

18. A tape winding method according to claim 1, wherein said predetermined temperature is a temperature just under a glass transition temperature of a material of said base film forming said tape.

19. A tape winding method according to claim 2, wherein said predetermined temperature is a temperature just under a glass transition temperature of a material of said base film forming said tape.

20. A tape winding method according to claim 3, wherein said predetermined temperature is a temperature just under a glass transition temperature of a material of said base film forming said tape.
